# EUROPEAN PATENT APPLICATION

(11) **EP 4 206 947 A1**
(43) Date of publication of application: **05.07.2023**
(21) Application number: 21218255.4
(22) Date of filing: 30.12.2021
(51) Int. Cl.: G06F 16/25

(54) **A METHOD AND A SYSTEM FOR MERGING RELATIONAL DATABASES**

(71) Applicant: Advanced Digital Broadcast S.A., 1293 Bellevue (CH)
(72) Inventor: PAJAK, Pawel, 65-119 Zielona Gora (PL)
(74) Representative: Kancelaria Eupatent.pl Sp. z.o.o

(57) **Abstract**

A computer-implemented method for merging relational databases, wherein a first database (100) to be merged has a first schema defining a plurality of tables (110, 120, 130) and a second database (200) to be merged has a second schema defining a plurality of tables (210, 220, 230), wherein the first schema and the second schema are the same, and wherein the tables (110, 120, 130, 210, 220, 230) of the databases (100, 200) contain rows (111, 112, 121, 122, 131, 132, 211, 212, 221, 222, 231, 232) of data, wherein the data in the first database (100) contains foreign keys that refer to rows of another table, the method comprising the successive steps of: defining (401) table uniquifiers; executing (402) a row merging procedure for each row of each table (110, 120, 130) of the first database (100) to define a list of new rows to be added to the second database (200); and adding (403) the rows from the list of new rows to the second database (200).

## Description

### TECHNICAL FIELD

The present invention relates to merging relational databases, in particular to merging two relational databases having the same schema into one database.

### BACKGROUND

Relational databases are often used to store data in a computer system. For example, relational databases can be used to manage devices, such as digital television set-top boxes in a hotel chain. The hotel chain may include a plurality of hotel buildings in different places all over the world. In each hotel there are rooms with set-top boxes and TVs. A computer management system can be configured to manage the set-top boxes for all hotels within the hotel chain, for example defining channel lineups, configuring VOD (Video on Demand) services, process guest invoices, etc. Data are stored in one relational database in a form of the tables. For example, there a 'station' table may comprise rows defining TV stations, wherein for each TV station there is a row with its channel number, tuning parameters, label, etc.

The same system can be used by different hotel chains independently. In such a case, there are multiple instances of the system, each using its own database. The databases have the same schema (the same list of tables and relations between them), however some data in tables may be different. For example, the guests invoices can be all different because each system manages different hotels. However, some data might be similar or even the same. For example, the same TV station can be configured in the 'station' table of both databases.

After two instances of the system have run for some time independently of each other, it may become necessary to merge the databases into a single database - for example, when one hotel chain acquires another hotel chain and they intend to unify their database system to a single instance, to manage all hotels of the enhanced chain. It may be challenging to merge the databases such as to preserve all existing data.

### SUMMARY

Therefore, there is a need to provide an efficient method and a system for merging relational databases, in particular for merging two relational databases having the same schema into one database.

When merging such databases, data (represented by rows in the tables) cannot be just simply copied from one table to another.

Firstly, this is because some tables may represent data that might be almost the same. For example, a table representing TV content rating can hold a row for each rating level used in different countries (such as "PG" in Canada). In the merged table, duplication of such information is not desired. Preferably, all ratings from all countries should be stored only once. However, when performing the merge, it should be checked whether for some reason the same rating has a different age limit in the databases. Moreover, even in case of two rows having the same values (such as the same rating name and the same age level), their row IDs (identifiers) might differ, and it might be necessary to assign a new ID to a row in the merged database.

Secondly, other tables may contain rows that just have to be copied. However, these rows can have foreign keys to other tables. In the merged table the links created by foreign keys should be still correct. For example, if a row refers to a row in a 'TV rating' table, it is necessary to make sure that after the merge the row still refers to a row in a 'TV rating' table that's semantically the same (for example, it's still a "PG" rating level).

The object of the invention is a computer-implemented method for merging relational databases, wherein a first database to be merged has a first schema defining a plurality of tables and a second database to be merged has a second schema defining a plurality of tables, wherein the first schema and the second schema are the same, and wherein the tables of the databases contain rows of data, wherein the data in the first database contains foreign keys that refer to rows of another table. The method comprising the successive steps of: defining table uniquifiers; executing a row merging procedure for each row of each table of the first database to define a list of new rows to be added to the second database; adding the rows from the list of new rows to the second database. The row merging procedure comprises the successive steps of: checking if the row to be processed has been already processed, and if so, terminating the procedure by returning a previously computed row identifier; for each column that belongs to the table uniquifier and contains a foreign key, executing the row merging procedure to determine a row identifier; checking if the second database has a matching row with the same uniquifier and if so, terminating the procedure by returning the second database matching row identifier; assigning a new identifier that is free in the table of the second database; for each column that does not belong to the table uniquifier and contains a foreign key, executing the row merging procedure to determine a row identifier; adding the row to the list of the new rows; returning the identifier of the new row.

Further, the invention relates to a computer-implemented system comprising at least one nontransitory processor-readable storage medium that stores at least one of processor-executable instructions and data, and at least one processor communicably coupled to the at least one nontransitory processor-readable storage medium, wherein the system is configured to perform the method as described herein.

The invention also relates to a computer program comprising program code means for performing all the steps of the computer-implemented method as described herein when said program is run on a computer, as well as a computer readable medium storing computer-executable instructions performing all the steps of the computer-implemented method as described herein when executed on a computer.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually, these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a nontransitory storage medium may include a device that may be tangible, meaning that the device has a concrete physical form, although the device may change its physical state. Thus, for example, non-transitory refers to a device remaining tangible despite a change in state.

### BRIEF DESCRIPTION OF DRAWINGS

The present invention will be shown by means of example embodiments on a drawing, wherein:
Fig. 1 shows an example structure of two relational databases to be merged;
Fig. 2 shows an example database schema for a database related to television system;
Fig. 3 shows a general procedure for merging two databases;
Fig. 4 shows a row merging procedure;
Fig. 5 shows example contents of a source database;
Fig. 6 shows example contents of a target database;
Fig. 7 shows example contents of a merged database;
Fig. 8 shows a computer system for implementing the method for merging the databases.

### DETAILED DESCRIPTION OF EMBODIMENTS

The embodiment presented herein relates to merging two relational databases: a source table and a target table. In the present invention, the databases are merged by adding data of the source table to the target table, such that after the merge the target table contains merged data of the original source and target tables.

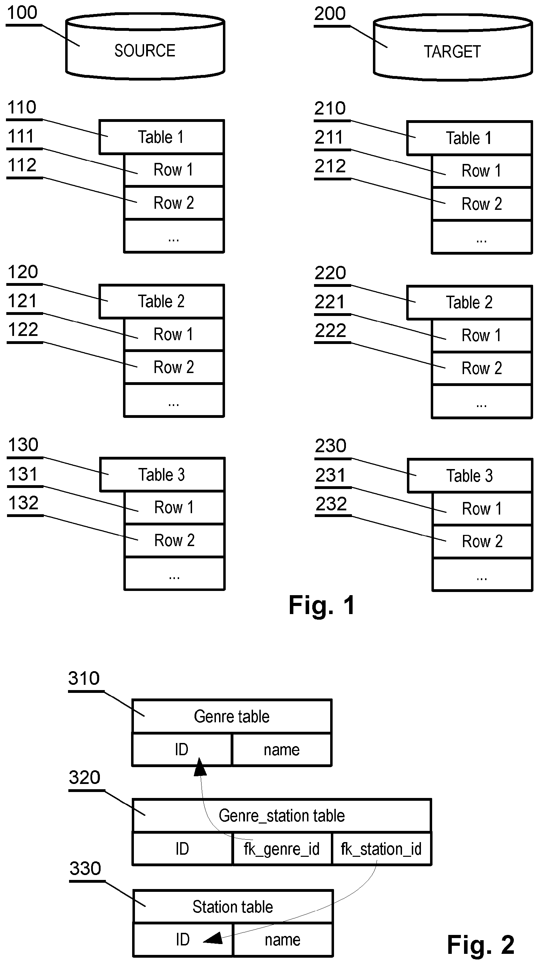

Fig. 1 shows an example structure of two relational databases to be merged. The first database 100 to be merged (called a source) has a first schema that defines a plurality of tables 110, 120, 130, each table having a plurality of rows 111, 112, 121, 122, 131, 132 containing data. The second database 200 to be merged (called a target) has a second schema that is the same as the first schema, i.e. it defines tables 210, 220, 230 having the same structure as the tables 110, 120, 130 of the first schema, just the contents of data stored in rows 211, 212, 221, 222, 231, 232 (and also the amount of data, i.e. the number of rows in each table) is partially the same and partially different from the contents of the data stored in the rows 111, 112, 121, 122, 131, 132 of the source table 100. Some of the tables may store relations between data stored in the other tables, for example the third table 130, 230 may store relations between data of the first table 110, 210 and the second table 120, 220.

Fig. 2 shows an example database schema for a database related to television system. The database comprises three tables:
- genre table 310 - it contains columns that define a row id and a name of a genre (e.g., "Sports", "News")
- station table 320 - it contains columns that define a row id and a name of a tv station (e.g., "CNN", "Eurosport")
- genre_station table 330 - it contains columns that define a row id, an id of a station and an id of a genre; this table is used to associate a station with a genre; the same station can be associated with many genres.

Both the source database 100 and the target database 200 must have the same schema, i.e., the tables 110, 210 correspond to the table 310, the tables 120, 220 correspond to the table 320, the tables 120, 230 correspond to the table 330.

In a real-world applications a database schema can have hundreds of tables with a complex set of relations between tables. The merge method of the present invention is suitable to handle all such cases.

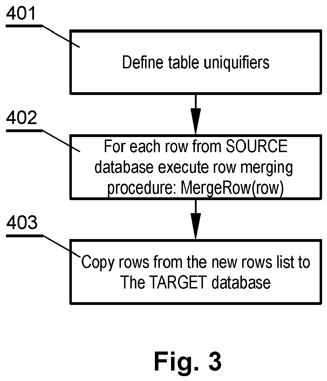

Fig. 3 shows a general procedure for merging two databases i.e., adding the rows of the source database to the target database.

In step 401, a uniquifier is defined for each table of the databases to be merged. The uniquifier is essentially a key comprised of one or more columns whose values uniquely identify rows from the table. When comparing rows from the same table in different databases, it's said that the rows match by the uniquifier if their uniquifier column values are the same.

The uniquifiers should be defined by someone who knows how a database is used in a particular system. That step needs to be executed once for a particular database schema. This means that the same definition can be reused to merge many databases of that schema. For the sample database schema shown in Fig. 2 the definition of uniquifiers is:
- genre: name
- station: name
- genre_station: fk_genre_id, fk_station_id

If a uniquifier contains a foreign key (fk_genre_id/fk_station_id in the example), then the merge method does not use the numeric value of a row id in the referred table. Instead, it recursively uses the definition of an uniquifier for the referred tables (genre/station in the example).

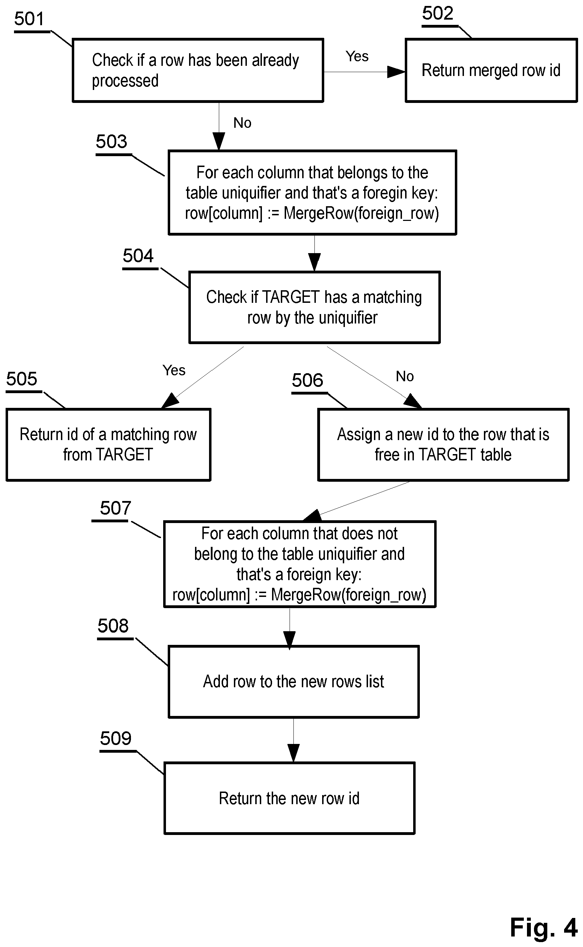

In step 402, the source database is read. For reach row of each table from the source database, a row merging procedure (also referred to as MergeRow) is executed. The row merging procedure is shown on Fig. 4.

The row merging procedure puts new rows that need to be inserted into target database to a new rows list. In step 403, the rows from that list are inserted into target database. That completes the merge.

The input for the row merging procedure is a data object that defines a single row and an identifier of a table to which it belongs. The row merging procedure can be executed with the same row many times because the row merging procedure executes itself recursively. However, the procedure checks if that happened in the past (step 501) and if so, it returns the previously computed row id (step 502). In step 503, the row is prepared for matching. It's crucial that the row foreign keys pointing to other rows in source database are changed to foreign keys pointing to the rows in target database. This is achieved by executing the row merging procedure recursively. In step 504, it's checked if there is a row in the target database that matches the input row by the table uniquifier. This means that the procedure looks for a row with the same column values but only of those listed in the table uniquifier. If there is a match, then the row does not need to be copied to the target database - it's already there (step 505). If not (step 506), the procedure looks for a free id to assign to the row (it's possible that a row id from the source database is used by a different row in the target database). In step 507, the procedure fixes foreign keys that are not listed in the uniquifier. After that, the row is ready to be added to the new rows list (508). The new id is returned (step 509).

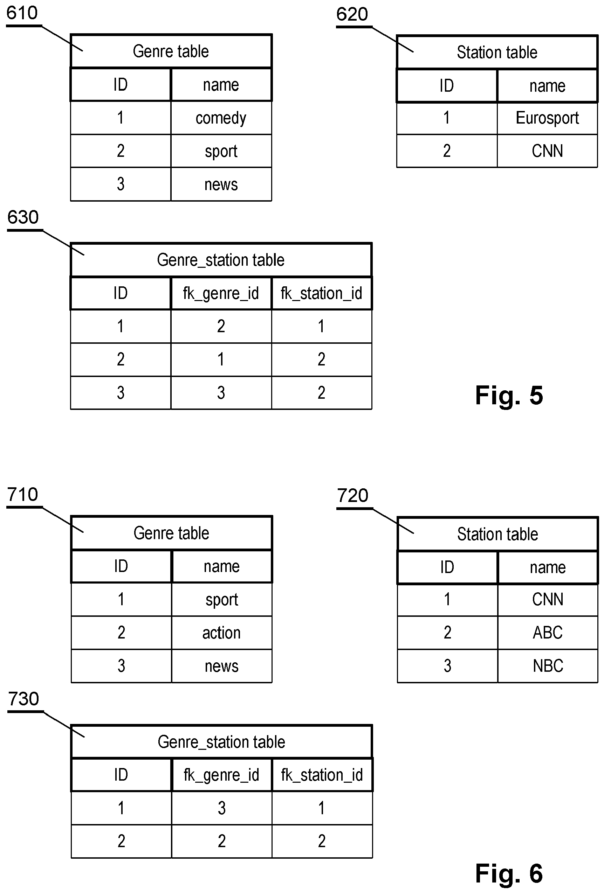

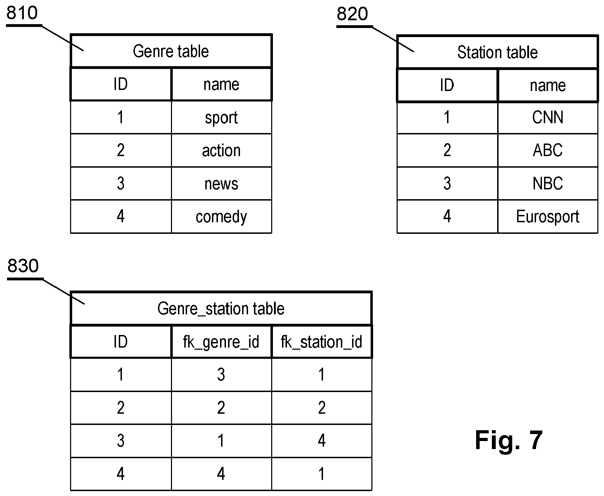

To better understand the procedures of Fig. 3 and 4, an example will be presented below of merging a source database having contents as shown in Fig. 5 with the target database having contents as shown in Fig. 6 to output a merged database as shown in Fig. 7.

Assume that in step 402 the rows are processed consecutively, first the consecutive rows of the genre table 610, then consecutive rows of the station table 620 and then the consecutive rows of the genre_station table 630.

First, the row merging procedure of Fig. 4 is executed for the first row of the genre table 610 (genre, 1). Next, the row merging procedure is executed for the second row of the genre table 610 (genre, 2) and so on. The following actions will be taken at consecutive steps of the row merging procedure:
MergeRow(genre, 1)
   501 - No
   503 - not applicable (no foreign keys)
   504 - No
   506 - the new free id is "4"
   507 - not applicable (no foreign keys)
   508 - add (genre, 4, comedy) to new rows list
   509 - return "4"
MergeRow(genre, 2)
   501 - No
   503 - not applicable (no foreign keys)
   504 - Yes (because target contains a row "sport" with id of "1")
   505 - return "1"
MergeRow(genre, 3)
   501 - No
   503 - not applicable (no foreign keys)
   504 - Yes
   505 - return "3"
MergeRow(station, 1)
   501 - No
   503 - not applicable (no foreign keys)
   504 - No
   506 - the new free id is "4"
   507 - not applicable (no foreign keys)
   508 - add (station, 4, Eurosport) to new rows list
   509 - return "4"
MergeRow(station, 2)
   501 - No
   503 - not applicable (no foreign keys)
   504 - Yes
   505 - return "1"
MergeRow(genre_station, 1)
   501 - No
   503:
   row[fk_genre_id] = MergeRow(genre, 2)
   501 - Yes
   502 - return "1"
   row[fk_station_id] = MergeRow(station, 1)
   501 - Yes
   502 - return "4"
   504: No
   506: new free id is "3"
   507: not executed
   508: add (genre_station, 3, 1, 4) to new rows list
   509: return "3"
MergeRow(genre_station, 2)
   501 - No
   503:
   row[fk_genre_id] = MergeRow(genre, 1)
   501 - Yes
   502 - return "4"
   row[fk_station_id] = MergeRow(station, 2)
   501 - Yes
   502 - return "1"
   504: No
   506: new free id is "4"
   507: not executed
   508: add (genre_station, 4, 4, 1) to new rows list
   509: return "3"
MergeRow(genre_station, 3)
   501 - No
   503:
   row[fk_genre_id] = MergeRow(genre, 3)
   501 - Yes
   502 - return "3"
   row[fk_station_id] = MergeRow(station, 2)
   501 - Yes
   502 - return "1"
   504: Yes (because target contains a row with values (3,1) having id of "1")
   505: return "1"

After the procedure is finished, the contents of the new rows list to be added to the tables 710, 720, 730 of the target database of Fig. 6, to result in tables 810, 820, 830 of the merged database of Fig. 7 will be:
genre, 4, comedy
station, 4, Eurosport
genre_station, 3, 1, 4
genre_station, 4, 4, 1

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according to the technical concept presented herein.

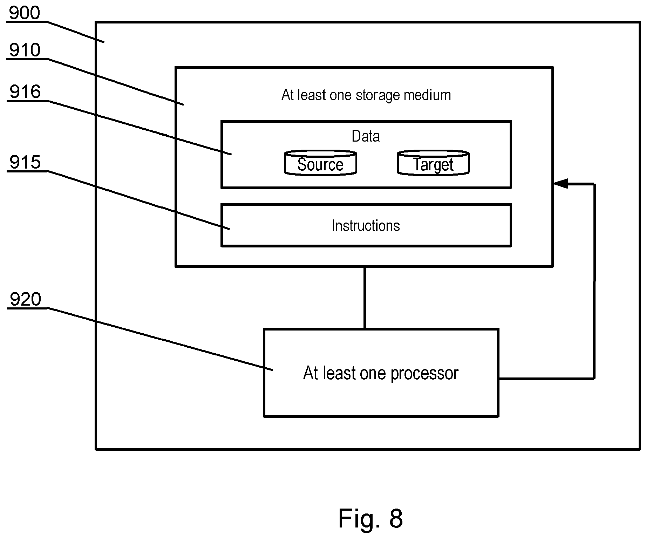

Fig. 8 shows a structure of a computer-implemented system 900 that includes at least one nontransitory processor-readable storage medium 910 that stores at least one of processor-executable instructions 915 and data 916; and at least one processor 920 communicably coupled to the at least one nontransitory processor-readable storage medium 910. The data 916 includes the relational databases. The data 916 may be stored at the same physical carrier or at different carriers. The at least one processor 920 is configured to (by executing the instructions 915 and reading the data 916) perform the method of Figs. 3 and 4.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only and are not exhaustive of the scope of the technical concept presented herein.

Accordingly, the scope of protection is not limited to the preferred embodiments described in the specification but is only limited by the claims that follow.

## Claims

1. A computer-implemented method for merging relational databases, wherein a first database (100) to be merged has a first schema defining a plurality of tables (110, 120, 130) and a second database (200) to be merged has a second schema defining a plurality of tables (210, 220, 230), wherein the first schema and the second schema are the same, and wherein the tables (110, 120, 130, 210, 220, 230) of the databases (100, 200) contain rows (111, 112, 121, 122, 131, 132, 211, 212, 221, 222, 231, 232) of data, wherein the data in the first database (100) contains foreign keys that refer to rows of another table, the method comprising the successive steps of:
• defining (401) table uniquifiers;
• executing (402) a row merging procedure for each row of each table (110, 120, 130) of the first database (100) to define a list of new rows to be added to the second database (200); and
• adding (403) the rows from the list of new rows to the second database (200);
• wherein the row merging procedure comprises the successive steps of:
∘ checking (501) if the row to be processed has been already processed, and if so, terminating the procedure by returning (502) a previously computed row identifier;
∘ for each column that belongs to the table uniquifier and contains a foreign key, executing (503) the row merging procedure to determine a row identifier;
∘ checking (504) if the second database (200) has a matching row with the same uniquifier and if so, terminating the procedure by returning (505) the second database (200) matching row identifier;
∘ assigning (506) a new identifier that is free in the table of the second database (200);
∘ for each column that does not belong to the table uniquifier and contains a foreign key, executing (507) the row merging procedure to determine a row identifier;
∘ adding the row to the list of the new rows; and
∘ returning the identifier of the new row.

2. A computer-implemented system comprising at least one nontransitory processor-readable storage medium (910) that stores at least one of processor-executable instructions (915) and data (916), and at least one processor (920) communicably coupled to the at least one nontransitory processor-readable storage medium (910), wherein the system is configured to perform the method according to claim 1.

3. A computer program comprising program code means for performing all the steps of the computer-implemented method according to claim 1 when said program is run on a computer.

4. A computer readable medium storing computer-executable instructions performing all the steps of the computer-implemented method according to claim 1 when executed on a computer.
